# EUROPEAN PATENT SPECIFICATION

(11) **EP 1 296 425 B1**
(45) Date of publication and mention of the grant of the patent: **24.06.2009**
(21) Application number: 02256498.3
(22) Date of filing: 19.09.2002
(51) Int. Cl.: H02B 1/052

(54) **Expandable housing**
Expandierbares Gehäuse
Boitier extensible

(30) Priority: 19.09.2001 GB 0122628
(43) Date of publication of application: 26.03.2003
(73) Proprietor: Camden Electronics Limited, St. Albans, Hertfordshire AL3 6PQ (GB)
(72) Inventor: Taylor, Steven, Hunsdon, Hertfordshire SG12 8PP (GB); Hatter, Andrew, Codicote, Hitchin, Hertfordshire SG4 8TR (GB)
(74) Representative: Maughan, Sophie Louise

(56) References cited:
- WO-A-85/02516
- CA-A- 2 285 135
- DE-U- 20 004 260
- US-A- 4 991 057

## Description

### Field of the Invention

The present invention relates to an enclosure which is DIN rail mounted.

### Background to the Invention

A DIN rail mounted enclosure is used to house electrical/electronic circuitry and in combination with a surface mounted DIN rail provides a useful system for retaining and storing equipment. Typically, the enclosures are manufactured from a thermoplastics material such as a polycarbonate. A manufacturer will typically produce a range of enclosures to cope with the demands of customers for different sizes of housings for their equipment. Each enclosure in the range requires an associated mould tool to produce the enclosure. It is expensive to produce the mould tools and subsequently to keep sufficient quantities of the parts in stock to satisfy the demands of customers. Customers tend to design their equipment to fit within an enclosure of a particular size offered by the manufacturer since bespoke DIN rail mounted enclosures would be prohibitively expensive unless made in sufficiently high volumes. An arrangement of extendable enclosure is disclosed in DE-20004260 U. Extendable enclosures used in other contexts are disclosed in CA-2285135, US-4991057 and WO 85/02516.

### Summary of the Invention

According to the present invention, there is provided a DIN rail mounted enclosure used to house electrical/electronic circuitry, which comprises a base co-operatively engaged with a DIN rail, a main housing for receiving the electrical/electronic circuitry, and an initially separate extension section that is adapted to engage the main housing to increase the effective internal volume of the enclosure for receiving equipment, wherein the extension section is adapted to interlock with the main housing and the main housing and the extension section comprise snap fittings to permit the extension section to engage the main housing, wherein the snap fittings comprise a snap fit hinge between the main housing and the extension section.

The snap fittings may comprise a hinge of a type known as a "living" hinge, so that the extension section forms a hinged lid section. The extension section may comprise an integral lid or may include suitable fittings to receive an initially separate lid section. Such a lid section could be designed to fit both the extension section and the main housing so that the enclosure could be sold either with or without the extension section, depending on customer requirements.

Preferably, the enclosure is formed from a thermoplastics material, more preferably a polycarbonate. In a preferred embodiment, the extension section is formed from a transparent plastics material so that it is possible to view the equipment contained within an enclosure.

The present invention provides a more versatile DIN rail mounted enclosure that offers flexibility in terms of the effective internal volume available to house equipment. The extension section can be snap fitted to the top of the main housing. With appropriate design, the extension section or sections can be sized to fit the main housings of a range of enclosures having different footprints. This would mean that fewer parts would have to be maintained in stock at any one time. It also offers customers the opportunity to retrofit additional equipment within an enclosure should the design of their equipment change shape or configuration during its operational lifetime.

### Brief Description of the Drawings

Examples of the present invention will now be described in detail with reference to the accompanying drawings, in which:
Figure 1 shows a simplified schematic of a first example of a DIN rail mounted enclosure in accordance with the present invention;
Figure 2 shows a second example of a DIN rail mounted enclosure in accordance with the present invention;
Figure 3 shows a third example of a DIN rail mounted enclosure in accordance with the present invention.

### Detailed Description

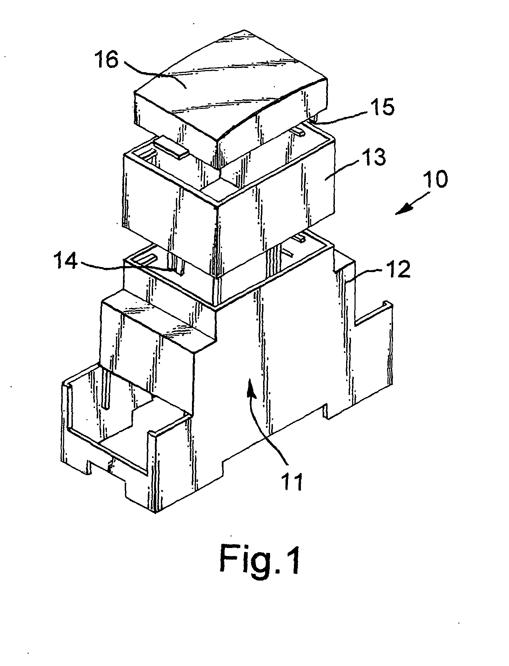

Figure 1 shows an example of a DIN rail mounted enclosure 10 in accordance with the present invention. The enclosure 10 comprises a base section 11 adapted to fit a conventional surface mounted DIN rail (not shown) and includes a main housing 12 for receiving equipment (not shown). The design includes a snap fit extension section 13 that fits the top part of the main housing 12 and thereby increases the effective volume offered by the enclosure 10 for receiving equipment. Snap fittings 14 of a conventional type are provided around the perimeter of the main housing 12 and the extension section 13. A snap fit hinge 15 is also provided between an extension lid section 16 (which itself offers an additional extension to the internal volume) and the extension section 13 which would also fit the main housing 12 in the absence of the extension section 13. The entire enclosure 10 is formed from a polycarbonate plastics material.

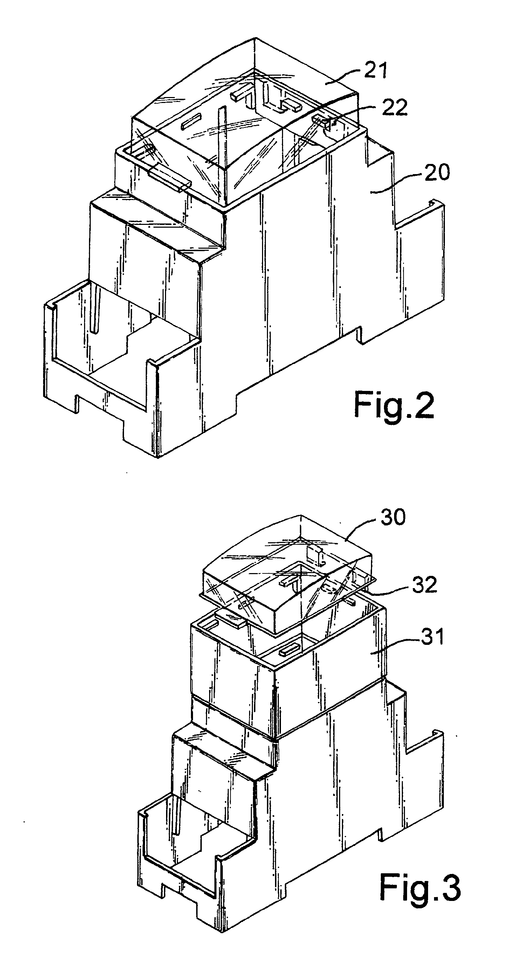

The example of Figure 2 includes only a single extension section 21 that forms a lid which is fitted to the main housing 20, but with an internal volume that effectively extends the internal volume of the main housing. In this example, the extension section 21 is formed of a transparent plastics material and is hinged to the main housing by way of a snap fit hinge 22. Similarly, an extension lid section 30 in the example of Figure 3 is also transparent and is fitted to an adjacent extension section 31 by way of a snap fit hinge 32.

The present invention provides a more versatile DIN rail mounted enclosure that offers flexibility in terms of the effective internal volume available to house equipment. The extension section can be snap fitted to the main housing. With appropriate design, the extension section or sections can be sized to fit the main housings of a range of enclosures having different footprints. This would mean that fewer parts would have to be maintained in stock at any one time. It also offers customers the opportunity to retrofit additional equipment within an enclosure should the design of their equipments change shape or configuration during its operational lifetime.

## Claims

1. A DIN rail mounted enclosure (10) used to house electrical/electronic circuitry, which comprises a base (11) co-operatively engaged with a DIN rail, a main housing (12) for receiving the electrical/electronic circuitry, and an initially separate extension section (13) that is adapted to engage the main housing (12) to increase the effective internal volume of the enclosure (10) for receiving equipment, wherein the extension section (13) is adapted to interlock with the main housing (12) and the main housing (12) and the extension section (13) comprise snap fittings (14) to permit the extension section (13) to engage the main housing (12), **characterised in that** the snap fittings (14) comprise a snap fit hinge between the main housing (12) and the extension section (13).

2. An enclosure according to claim 1, wherein the hinge (14) is of a type known as a "living" hinge, so that the extension section (13) forms a hinged lid section.

3. An enclosure according to any of claims 1 or 2, wherein the extension section (13) comprises an integral lid.

4. An enclosure according to any of claims 1, 2 or 3, wherein the extension section (13) comprises suitable fittings (15) to receive an initially separate lid section (16).

5. An enclosure according to claim 4, wherein the lid section (16) fits both the extension section (13) and the main housing (12).

6. An enclosure according to any preceding claim, wherein the enclosure (10) is formed from a thermoplastics material.

7. An enclosure according to claim 6, wherein the enclosure (10) is a polycarbonate.

8. An enclosure according to claim 6 or 7, wherein the extension section (13) is formed from a transparent plastics material so that it is possible to view equipment contained, in use, within the enclosure (10).

## Patentansprüche

1. Gehäuse (10) mit DIN-Schienen-Befestigung, das zur Aufnahme von elektrischen/elektronischen Schaltungen verwendet wird und das einen Basisteil (11), der in zusammenwirkender Weise mit einer DIN-Schiene in Eingriff steht, ein Hauptgehäuse (12) zur Aufnahme der elektrischen/elektronischen Schaltungen und einen anfänglich getrennten Erweiterungsabschnitt (13) umfasst, der für den Eingriff mit dem Haupt-Gehäuse (12) ausgebildet ist, um das effektive Innenvolumen des Gehäuses (10) zur Aufnahme von Geräten zu vergrößern, wobei der Erweiterungsabschnitt (13) zur Verriegelung mit dem Hauptgehäuse (12) ausgebildet ist und das Hauptgehäuse (12) und der Erweiterungsabschnitt (13) Rastansätze (14) umfassen, um es dem Erweiterungsabschnitt (13) zu ermöglichen, mit dem Hauptgehäuse (12) in Eingriff zu kommen, **dadurch gekennzeichnet, dass** die Rastansätze (14) ein Rast-Scharnier zwischen dem Haupt-Gehäuse (12) und dem Erweiterungsabschnitt (13) umfassen.

2. Gehäuse nach Anspruch 1, bei dem das Scharnier (14) von dem Typ ist, der als Filmscharnier bekannt ist, so dass der Erweiterungsabschnitt (13) einen scharnierbefestigten Deckelabschnitt bildet.

3. Gehäuse nach einem der Ansprüche 1 oder 2, bei dem der Erweiterungsabschnitt (13) einen einstückigen Deckel umfasst.

4. Gehäuse nach einem der Ansprüche 1, 2 oder 3, bei dem der Erweiterungsabschnitt (13) getrennte Ansätze (15) aufweist, um einen anfänglich getrennten Deckelabschnitt (16) aufzunehmen.

5. Gehäuse nach Anspruch 4, bei dem der Deckelabschnitt (16) sowohl mit dem Erweiterungsabschnitt (13) als auch dem Hauptgehäuse (12) zusammenpasst.

6. Gehäuse nach einem der vorhergehenden Ansprüche, bei dem das Gehäuse (10) aus thermoplastischen Material hergestellt ist.

7. Gehäuse nach Anspruch 6, bei dem das Gehäuse (10) aus Polycarbonat ist.

8. Gehäuse nach Anspruch 6 oder 7, bei dem der Erweiterungsabschitt (13) aus einen transparenten Kunststoffmaterial geformt ist, so dass es möglich ist, Geräte, die im Gebrauch in dem Gehäuse (10) enthalten sind, zu betrachten.

## Revendications

1. Coffret (10) monté sur rail DIN utilisé pour loger des circuits électriques / électroniques, qui comprend une base (11) mise en prise de manière coopérative avec un rail DIN, un boîtier principal (12) pour recevoir les circuits électriques / électroniques, et une section d'extension (13) initialement séparée qui est adaptée pour mettre en prise le boîtier principal (12) pour augmenter le volume interne effectif du coffret (10) pour recevoir l'équipement, dans lequel la section d'extension (13) est adaptée pour se verrouiller avec le boîtier principal (12) et le boîtier principal (12) et la section d'extension (13) comprennent des raccords à encliquetage (14) pour permettre à la section d'extension (13) de mettre en prise le boîtier principal (12), **caractérisé en ce que** les raccords à encliquetage (14) comprennent une charnière à emboîtement - pression entre le boîtier principal (12) et la section d'extension (13).

2. Coffret selon la revendication 1, dans lequel la charnière (14) est d'un type connu sous le nom de charnière « active », de sorte que la section d'extension (13) forme une section de couvercle articulée.

3. Coffret selon l'une quelconque des revendications 1 ou 2, dans lequel la section d'extension (13) comprend un couvercle solidaire.

4. Coffret selon l'une quelconque des revendications 1, 2 ou 3, dans lequel la section d'extension (13) comprend des raccords (15) appropriés pour recevoir une section de couvercle (16) initialement séparée.

5. Coffret selon la revendication 4, dans lequel la section de couvercle (16) s'adapte à la fois à la section d'extension (13) et au boîtier principal (12).

6. Coffret selon l'une quelconque des revendications précédentes, dans lequel le coffret (10) est formé à partir d'un matériau thermoplastique.

7. Coffret selon la revendication 6, dans lequel le coffret (10) est un polycarbonate.

8. Coffret selon la revendication 6 ou 7, dans lequel la section d'extension (13) est formée à partir d'une matière plastique transparente de sorte qu'il est possible de voir l'équipement contenu, à l'usage, à l'intérieur du coffret (10).
